Europäisches Patentamt

European Patent Office

Office européen des brevets

(11) Publication number: **0 162 579**
**B1**

# EUROPEAN PATENT SPECIFICATION

(45) Date of publication of patent specification: **31.01.90**

(51) Int. Cl.⁵: **F 03 G 7/04**, F 28 G 13/00

(21) Application number: **85302722.5**

(22) Date of filing: **17.04.85**

(54) Ocean thermal energy conversion power plant.

(30) Priority: **17.04.84 JP 7588/84**

(43) Date of publication of application:
**27.11.85 Bulletin 85/48**

(45) Publication of the grant of the patent:
**31.01.90 Bulletin 90/05**

(84) Designated Contracting States:
**DE FR GB SE**

(56) References cited:
**GB-A-1 059 050**
**US-A-1 493 368**
**US-A-3 975 912**
**US-A-4 062 189**

**JOURNAL OF ENGINEERING FOR INDUSTRY,
vol. 96, no. 4, November 1974, pages 1119-1129,
New York, US; J.G. McGOWAN et al.: "Ocean
thermal difference power-plant design"**

(73) Proprietor: **SAGA UNIVERSITY
1 Honjo-machi
Saga-City Saga Pref. (JP)**

(72) Inventor: **Uehara, Haruo
4-3 Yaemizo 3-chome
Saga City Saga Pref. (JP)**
Inventor: **Nakaoka, Tsutomu
14-18 Onimaru-cho
Saga City Saga Pref. (JP)**

(74) Representative: **Senior, Alan Murray et al
J.A. KEMP & CO 14 South Square Gray's Inn
London WC1R 5EU (GB)**

Courier Press, Leamington Spa, England.

## Description

The present invention relates to an ocean thermal energy conversion power plant in which the electric power is generated by harnessing the temperature difference between warm water in the superficial layer of the ocean and cold water in the depth thereof, and, particularly, the operation efficiency on light load at times of low demand is improved and the unwanted matter deposited thereon is washed away.

A known ocean thermal energy conversion power plant of this kind is provided with each of an evaporator, a turbine connected with an electric generator and a condenser as main parts. Electric power generation is effected by the turbine, which is driven by an actuating liquid alternately evaporated and condensed on the basis of the temperature difference between the condenser through which the cold water is circulated. The warm water circulated through the evaporator drawn from the superficial layer of the ocean has a high temperature from 15 to 33 degrees centigrade, so that a defect results in that the unwanted matter or filth such as plankton, eggs of fishes and shell-fishes, dusts and the like are deposited on heat-conducting surfaces of the main parts and hence the efficiency of heat conduction is lowered. As for the prevention of such deposits, customarily adopted for obviating this defect, chlorine is injected into the circulating water, or is generated in the circulating water by the electrolysis effected by electrodes provided therein for removing the biological filth, see US Journal of Engineering, vol 96, No 4, November 1974, pages 1119-1129. Also sponge balls, brushes and the like are circulated together with the circulating water through the main instruments for removing the other matter. However, in an ocean thermal energy conversion power plant, the temperature difference available for the heat exchange is so small that a large amount of circulating water is required. Accordingly, the above customarily adopted prevention of deposited matter causes serious trouble such as great expense and environmental pollution. A large number of sponge balls, brushes and the like are necessitated, and also result in the lowered net power output caused by the increase of motive power consumed in the drawing pump, which is generally based on the increased circulation resistance originated therefrom, so that the increase of the cost of equipment and the unit price of power generation results therefrom.

Consequently, the conventional ocean thermal energy conversion ocean plant has a shortcoming such that the customary protection from deposited matter can only be employed, with difficulty and further results in an increase of the cost.

An object of the present invention is to provide an ocean thermal energy conversion power plant in which the above shortcoming is reduced such that, at times of low demand the operating efficiency is improved, and unwanted matter deposited on the main parts can be efficiently washed away.

US-A-4 062 189 discloses an ocean thermal energy conversion power plant and a method of operating such a plant in accordance with the prior art portions of claims 1 and 3, respectively. Whilst disclosing the circulation of cold water through an evaporator section when the evaporator section is not being used as an evaporator, US-A-4 062 189 does not show the plant and method of the present invention as characterised in claims 1 and 3 which are particularly advantageous in that the evaporators are always operated with the same direction of warm water flow for maximum efficiency, and at times of low usage can simply be closed down in turn for flushing and cleaning with cold water, this flow being in a direction opposite to the direction of the circulation of said warm water therethrough during operation.

With the invention, in the ocean thermal energy conversion power plant, the main parts consist of plural evaporators and plural condensers, which are arranged in parallel respectively, with the turbine and the electric generator. At the daytime for instance, on heavy load, all of those evaporators and those condensers are operated in parallel respectively, so as to deal with the large power demand. At light load demand, for instance at the night, the numbers of the operated evaporators and the operated condensers are reduced, so as to efficiently deal with the reduced power demand.

In addition thereto, the power plant of the present invention is arranged in that the matter deposited on the main instruments during operation at high load can be washed away with backflowing clean cold water by means of circulating the excessive cold water no longer used in the unoperated condensers through the unoperated evaporators. Circulation is in the direction opposite to the ordinary circulation of the warm water, so as to maintain the high efficiency of heat conduction effected by all of the evaporators under the continuation of the electric power generation. In this connection, the cavitation caused by the re-evaporation of the actuating liquid can be prevented by means of enclosing the circulating path thereof from each of outlets of the evaporators to the supplying pump therefor with water jackets.

In order that the invention may be more clearly understood the following description is given by way of example with reference to the accompanying drawings in which:

Fig. 1 is a circuit diagram showing an example of the arrangement of the ocean thermal energy conversion power plant according to the present invention; and

Figs. 2 and 3 are circuit diagrams showing examples of the situation of lowered power operation of the same respectively.

Throughout different views of the drawings, A is an ocean thermal energy conversion power plant; 1 is an evaporating section; 1-1 and 1-2 are evaporators; 2 is an electric power generating section; 3 is a condensing section; 3-1 and 3-2 are condensers; 4 is a liquid supplying section; 9 is a liquid reservoir; 10 is a liquid supplying pump; 11 is an actuating liquid inlet; 12 is a water jacket; 13-1 to 13-8 are stopping valves; 14 is a warm water pipe; 15-1 and 15-2 are inlet valves; 16-1 and 16-2 are outlet valves; 17 is a warm water exhausting pipe; 18 is a cold water pipe; 19-1 and 19-2 are cold water valves; 20 is a cold water exhausting pipe; 21 is a throttle valve; 22 is an extension of cold pipe 18; 23-1 and 23-2 are warm water outlets; 24-1 and 24-2 are washing water inlet valves; 25-1 and 25-2 are warm water inlets; 26-1 and 26-2 are washing water outlet valves; and 27 is a washing water exhausting pipe.

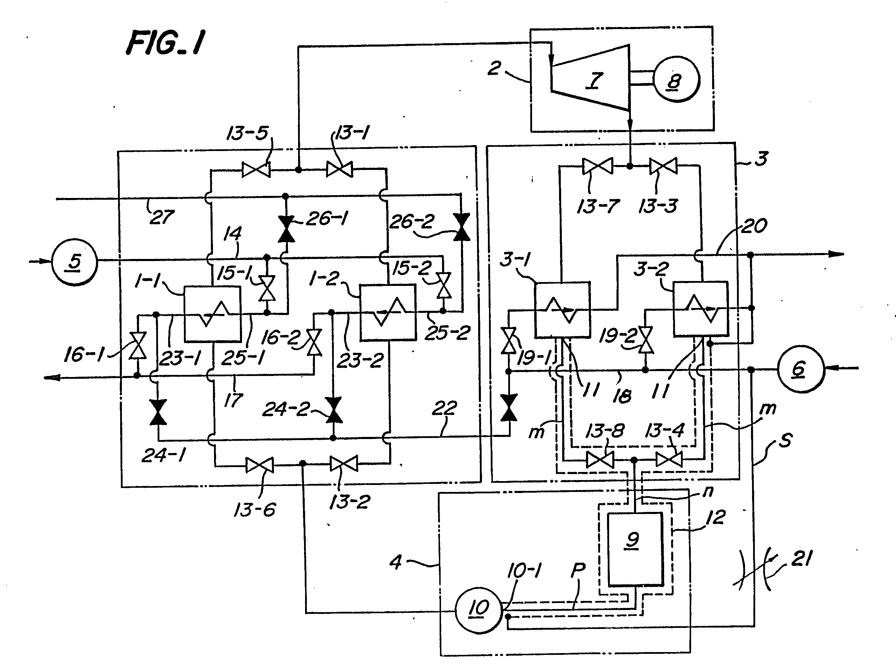

The ocean thermal energy conversion power plant arranged as shown in Fig. 1 according to the present invention consists of an evaporating section 1, an electric power generating section 2, a condensing section 3, a liquid supplying section 4, a warm water pump 5 and a cold water pump 6, these sections and instruments being connected with each other through pipes and valves.

In the above exemplified arrangement, the evaporating section 1 is arranged such that two evaporators 1-1 and 1-2 are connected through with each other in parallel with respect to the actuating liquid, meanwhile together connected with a warm water pump 5 in common, so as to evaporate the actuating liquid by heating it with the warm water supplied from the warm water pump 5.

On the other hand, the electric power generating section 2 consists of a turbine 7 driven by the vapor of the actuating liquid and an electric generator 8 connected therewith.

Besides, the condensing section 3 is arranged such that two condensers of the first 3-1 and the second 3-2 are connected with each other in parallel, so as to condense the vapor of the actuating liquid which vapor is exhausted from the turbine 7 by means of circulating the cold water drawn from the depth of the ocean by a cold water pump 6 therethrough.

On the other hand, the liquid supplying section 4 consists of a liquid reservoir 9 and a liquid supplying pump 10, so as to pressure-transport the actuating liquid separated from the vapor thereof through the liquid reservoir 9 into the evaporating section 1 through the liquid supplying pump 10. In this connection, a suction head required for obviating the vapor locking caused by the cavitation is provided between the liquid reservoir 9 and the liquid supplying pump 10. In addition, the liquid path from an actuating liquid outlet 11 of the condensing section 3 to an inhaling inlet 10-1 is enclosed with a water jacket 12 over all of the surrounding surface thereof including the liquid reservoir 9, so as to further cool the previously condensed actuating liquid for obviating the occurrence of the perturbation caused by the back pressure of the turbine 7 by means of preventing the generation of bubbles in the actuating liquid. In this connection, it can be attained together therewith to lower the institution height of the power plant A by means of lowering the suction head of the liquid supplying pump 10 through this cooling of the actuating liquid.

In the power plant A arranged as described above, the actuating liquid is vaporized by the pressure transportation from the liquid reservoir 9 to the first and the second evaporators 1-1 and 1-2 provided in the evaporating section 1 through the liquid supplying pump 10, the vapor of the actuating liquid being supplied into the turbine 7, so as to effect the electric power generation through the electric generator 8 driven by the turbine 7. Thereafter, the vapor of the actuating liquid which vapor is exhausted from the turbine 7 is condensed by the passage through the first and the second condensers 3-1 and 3-2 in the condensing section 3, so as to return into the actuating liquid to be brought back into the liquid reservoir 9 through the above mentioned cycle. As a result of this cycle, the heat energy obtained on the basis of the temperature difference between the warm water in the evaporating section 1 and the cold water in the condensing section 3 is converted into the electric energy having the amount corresponding to the state variation of the actuating liquid, so as to derive the required electric power therefrom. In this connection, the numerals 13-1 to 13-8 denote stopping valves attached with back sheets which valves are provided for stopping the circulation of the actuating liquid through the unoperated evaporators and the unoperated condensers.

On the other hand, the warm water drawn from the superficial layer of the ocean through the warm water pump 5 is branched through warm water pipes 14 and supplied to the first and the second evaporations 1-1 and 1-2 through a first and a second inlet valves 15-1 and 15-2 respectively, so as to heat the actuating liquid therein. Thereafter, the warm water is exhausted through a warm water exhausting pipe 17 after jointed through a first and a second outlet valves 16-1 and 16-2 respectively.

In contrast thereto, the cold water drawn from the depth of the ocean through the cold water pump 6 is branched through cold water pipes 18 and supplied to the first and the second condensers 3-1 and 3-2 through a first and a second cold water valves 19-1 and 19-2 respectively, so as to cool the actuating liquid. Thereafter, the cold water is jointed and exhausted through a cold water exhausting pipe 20.

In this connection, the circulating path m from each of actuating liquid outlets 11 of the condensers 3-1, 3-2 to the stopping valves 13-4, 13-8, the circulating path n from those stopping valves 13-4, 13-8 to the liquid reservoir 9 and the circulating path p from the liquid reservoir 9 to the liquid supplying pump 10 including the stopping valves 13-4, 13-8 and the liquid reservoir 9 are enclosed by the water jackets 12 surrounding outer surfaces thereof, those water jackets 12 being supplied with the cold water introduced through a cold water bypass s connected with the cold water pipe 18, so as to cool those articles of the circulating paths m, n, p, the liquid reservoir 9 and the stopping valves 13-4, 13-8 from the outer surfaces thereof.

In the drawings, 21 denotes a throttle valve provided in the midway of the cold water bypass s, so as to regulate the amount of the cold water flowing through the water jackets 12.

On the other hand, an elongated portion 22 is branched from the cold water pipe 18 toward the evaporating section 1, and the tip of this elongated portion 22 being further branched and connected with the half ways between respective warm water outlets 23-1 and 23-2 of the first and the second evaporators and the first and the second outlet valves 16-1 and 16-2 respectively through a first and a second washing water inlet valves 24-1 and 24-2. In addition, the washing water supplied as mentioned above is exhausted through a washing water exhausting pipe 27 after jointed through a first and a second washing water outlet valves 26-1 and 26-2 which are branched and connected respectively with the halfways between a first and a second warm water inlets 25-1 and 25-2 of the first and the second evaporator 1-1 and 1-2 and the inlet valves 15-1 and 15-2.

In the ocean thermal energy conversion power plant according to the present invention which is arranged as described above, at the daytime during which the electric power demand is increased, the operational situation as shown in Fig. 1, where the first and the second washing water inlet valves 24-1, 24-2 and the respective inlet valves 26-1, 26-2 are closed as indicated by fully blackened symbols thereof in Fig. 1, mean while all of the remaining valves are opened, is employed.

As a result thereof, both of the warm and the cold waters and the actuating liquid are circulated in parallel through the first and the second evaporators 1-1, 1-2 in the evaporating section 1 and the first and the second condensers 3-1, 3-2 therein, so as to deal with the electric power demand increased at the daytime by means of carrying out the full power operation maximizing both of amounts of evaporated and condensed actuating liquids.

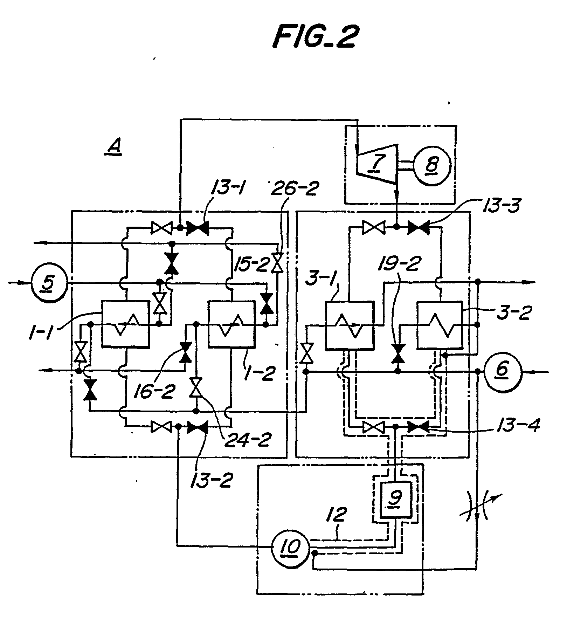

On the other hand, at the night during which the electric power demand is substantially halved and hence both of the amounts of evaporated and condensed actuating liquid can be substantially halved, the operational situation as shown in Fig. 2, where, for instance, the first evaporator 1-1 and the first condenser 3-1 are operated, meanwhile the second evaporator 1-2 and the second condenser 3-2 are unoperated, in other words, the operational situation where the second evaporator 1-2 and the second condenser 3-2 are excluded from the above mentioned situation of full power operation by means of closing the actuating liquid stopping valves 13-1, 13-2, 13-3, 13-4 connected therewith as well as by means of closing the second inlet valve 15-2 of the second evaporator 1-2 and the second outlet valve 16-2 together with the second cold water valve 19-2 of the second condenser 3-2 is employed.

As a result thereof, the half power operation in which both of the amounts of evaporated and condensed actuating liquids are halved by unoperating the second evaporator 1-2 and the second condenser 3-2, so as to deal with the halved electric power demand at the night.

In connection with this half power operational situation, by means of opening the second washing water inlet valve 24-2 and the outlet valve 26-2, the excessive cold water drawn by the cold water pump 6 is circulated through the second washing water inlet valve 24-2 from the second warm outlet 23-2 toward the second warm water inlet 25-2, in other words, in the direction opposite to the ordinarily circulated warm water, so as to wash away the filth deposited inside the second evaporator 1-3 at the daytime with the back flow of cold water through the second washing water outlet valve 26-2 as well as to exhaust it outside the power plant A through a washing water exhausting pipe 27.

In addition, the efficiency of heat exchange at the whole power plant A can be further improved by the sequential alternation at every predetermined period of the pair of evaporator and condenser to be unoperated and to be washed.

The operation and the effect of the above prevention and removal of filth deposition has been confirmed through the present inventor's experiments carried out over many years.

In addition, the cavitation caused by the re-evaporation of the actuating liquid can be prevented by means of enclosing the actuating liquid path from the first and the second condensers 3-1 and 3-2 to the liquid supplying pump 10 with the water jackets 12 through which the cold water is circulated, and hence the occurrence of perturbation caused by the back pressure of the turbine can be prevented also. As a result, the quiet and smooth revolution thereof can be attained, as well as the suction head required for the liquid supplying pump 10 can be lowered, so as to lower the institution height of the power plant A.

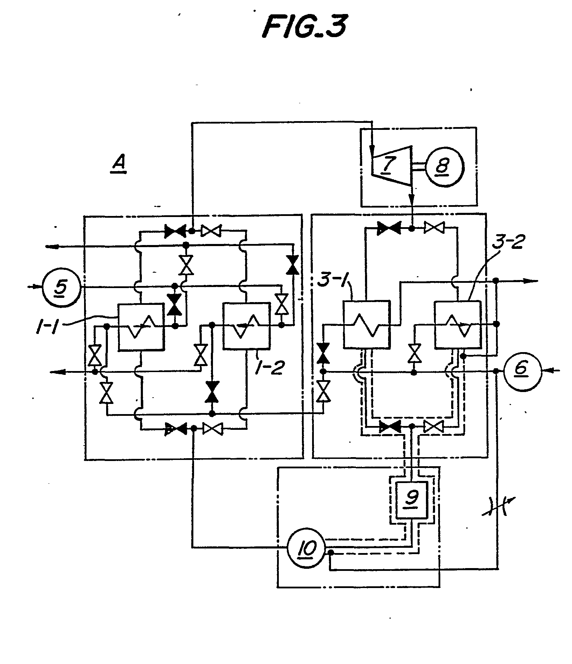

Next, in the contrary to the operational situation as shown in Fig. 2, the other operational situation where the second evaporator 1-2 and the second condenser 3-2 are operated, meanwhile the first evaporator 1-1 and the first condenser 3-1 are unoperated is shown in Fig. 3. In this connection, the combination of operated and unoperated instruments can be further changed, for instance, such as the first evaporator 1-1 and the second condenser 3-2, or, the second evaporator 1-2 and the first condenser 3-1.

The selection of these combinations can be readily attained as occasion demands by means of opening and closing valves individually belonging each of those articles.

In addition, in response to the seasonal variation of the electric power demand, the highest peak in the summer of the electric power demand can be dealt with by constituting the evaporating and the condensing sections of plural evaporators and condensers respectively, meanwhile the seasonally lowered peak in the winter of the electric power demand can be dealt with by unoperating a part of those plural evaporators and condensers for a long time, during which the decomposition maintenance of those unoperated instruments and the removal of the filth deposited thereon are carried out.

As is apparent from the above description, in the ocean thermal energy conversion power plant according to the present invention, the evaporating and the condensing sections are provided with plural evaporators and plural condensers respectively, respective parts of which are alternately unoperated, when the electric power demand is reduced. The excessive cold water drawn from the depth of the ocean and saved by the unoperated condensers is circulated through the unoperated evaporators in the direction opposite to the warm water drawn from the superficial layer of the ocean and supplied into those evaporators on the ordinary operation. As a result, the filth deposited inside the operated evaporators can be washed away, as well as the efficiency of heat exchange effected by those operated evaporators can be maintained at high level by the alternate unoperation of those condensers and evaporators. In addition, the circulating path of the actuating liquid in the power plant according to the present invention is enclosed by the water jacket from the outlets of the condensers to the liquid supplying pump, so as to obviate the cavitation of the actuating liquid. Consequently, the evident effects as mentioned above can be obtained according to the present invention.

## Claims

1. An ocean thermal energy conversion power plant in which the electric power generation is effected using an actuating liquid, wherein vapor of the actuating liquid is formed by evaporation due to heat exchange with warm water drawn from a superficial layer of an ocean and supplied to an evaporating section (1), the vapor is introduced into an electric power generating section (2) and the vapor exhausted from said electric power generating section is condensed due to heat exchange with cold water circulated. through a condensing section and drawn from deeper in said ocean in a condenser section (3), means being provided for permitting cold water to be circulated through the evaporating section at a time when it is not being used for evaporation purposes characterised in that the liquid is circulated back to said evaporating section (1) via a liquid reservoir (9) and a liquid supplying pump (10), and in that the evaporating section (1) and said condensing section (3) respectively include a plurality of evaporators (1-2, 1-2) and a plurality of condensers (3-1, 3-2), and control means (13, 15, 16, 24, 19) such that supply of actuating fluid and warm and cold ocean water respectively to some of said plurality of evaporators and condensers can be stopped at periods of low demand, rendering those condensers and evaporators inoperative, at which time said cold water can be circulated through the said unoperated evaporators (1-1, 1-2) in a direction opposite to the direction of circulation of said warm water therethrough during operation, so as to wash away unwanted matter deposited in said unoperated evaporators.

2. An ocean thermal energy conversion power plant as claimed in claim 1, characterised in that the path of said actuating liquid between the condensing section (3) and said evaporating section (1) through said liquid reservoir (9) and said liquid supplying pump (10) is enclosed by a water jacket (12) through which said cold water is circulated, so as to cool said actuating liquid when circulated in said path.

3. A method of operating an ocean thermal energy conversion power plant in which the electric power generation is effected using an actuating liquid, wherein vapor of the actuating liquid is formed by evaporation due to heat exchange with warm water drawn from a superficial layer of an ocean and supplied to an evaporating section (1), the vapor is introduced into an electric power generating section (2) and the vapor exhausted from said electric power generating section is condensed due to heat exchange with cold water circulated through a condensing section and drawn from deeper in said ocean in a condenser section (3), cold water being circulated through the evaporating section (1) at a time when the evaporating section is not being used for evaporation purposes, characterised in that the vapor is circulated back to said evaporating section (1) via a liquid reservoir (9) and a liquid supplying pump (10), and in that the evaporating section (1) and said condensing section (3) are respectively provided with a plurality of evaporators (1-2, 1-2) and a plurality of condensers (3-1, 3-2) and control means (13, 15, 16, 24, 19), and wherein the control means are so operated that supply of actuating fluid and warm and cold ocean water respectively to some of said plurality of evaporators and condensers is stopped at periods of low demand, rendering those condensers and evaporators inoperative, at which time said cold water is circulated through the said unoperated evaporators (1-1, 1-2) in a direction opposite to the direction of circulation of said warm water therethrough during operation, so as to wash away unwanted matter deposited in said unoperated evaporators.

4. A method according to claim 3 wherein the evaporators and condensers which are not operated during periods of low demand are changed in sequence.

## Patentansprüche

1. Kraftwerk zur Umsetzung der Wärmeenergie des Meeres, in dem die Elektroenergieerzeugung unter Verwendung einer Arbeitsflüssigkeit bewirkt wird, wobei Dampf der Arbeitsflüssigkeit durch Verdampfen auf Grund eines Wärmetausches mit von einer Oberflächenschicht eines Meeres abgezogenem warmen und einer Verdampfersektion (1) zugeführten Wasser gebildet wird, der Dampf in eine Elektroenergie-Erzeugersektion (2) eingeführt wird sowie der von der Elektroenergie-Erzeugersektion abgeführte Dampf auf Grund eines Wärmetausches mit durch eine Kondensationssektion umgewälztem und von tieferen Schichten im genannten Meer abgezogenem Wasser in einer Kondensatorsektion (3) kondensiert wird, wobei Einrichtungen vorgesehen sind, um ein Umwälzen von kaltem Wasser durch die Verdampfersektion zu einer Zeit zu ermöglichen, wenn sie nicht zu Verdampfungszwecken verwendet wird, dadurch gekennzeichnet, daß die Flüssigkeit über einen Flüssigkeit-Vorratsbehälter (9) sowie eine Flüssigkeit-Speisepumpe (10) zurück zur Verdampfersektion (1) umgewälzt wird und daß die Verdampfersektion (1) sowie die Kondensationssektion (3) jeweils eine Mehrzahl von Verdampfern (1-1, 1-2) sowie eine Mehrzahl von Kondensatoren (3-1, 3-2) und Regeleinrichtungen (13, 15, 16, 24, 19) derart enthalten, daß die Zufuhr der Arbeitsflüssigkeit sowie des warmen und kalten Meerwassers jeweils zu einigen aus dieser Mehrzahl von Verdampfern und Kondensatoren in Zeiträumen niedrigen Bedarfs unterbrochen werden kann, womit diese Kondensatoren sowie Verdampfer funktionsuntüchtig gemacht werden, zu welcher Zeit das kalte Wasser durch die untätigen Verdampfer (1-1, 1-2) in einer zur Umwälzrichtung des warmen Wassers durch diese während eines Betriebs entgegengesetzten Richtung umgewälzt werden kann, so daß unerwünschte, in den nicht im Betrieb befindlichen Verdampfern abgelagerte Stoffe weggespült werden.

2. Kraftwerk zur Umsetzung der Wärmeenergie des Meeres nach Anspruch 1, dadurch gekennzeichnet, daß der Weg der Arbeitsflüssigkeit zwischen der Kondensationssektion (3) und der Verdampfersektion (1) durch den Flüssigkeit-Vorratsbehälter (9) sowie die Flüssigkeit-Speisepumpe (10) hindurch von einem Wassermantel (12) umschlossen ist, durch den kaltes Wasser umgewälzt wird, so daß die Arbeitsflüssigkeit bei ihrem Umlauf im genannten Weg gekühlt wird.

3. Verfahren zum Betreiben eines Kraftwerks zur Umsetzung der Wärmeenergie des Meeres, in dem die Elektroenergieerzeugung unter Verwendung einer Arbeitsflüssigkeit bewirkt wird, wobei Dampf der Arbeitsflüssigkeit durch Verdampfen auf Grund eines Wärmetausches mit von einer Oberflächenschicht eines Meeres abgezogenem warmen und einer Verdampfersektion (1) zugeführten Wasser gebildet wird, der Dampf in eine Elektroenergie-Erzeugersektion (2) eingeführt sowie der von der Elektroenergie-Erzeugersektion abgeführte Dampf auf Grund eines Wärmetausches mit durch eine Kondensationssektion umgewälztem und von tieferen Schichten im genannten Meer abgezogenem Wasser in einer Kondensatorsektion (3) kondensiert wird, wobei kaltes Wasser durch die Verdampfersektion (1) zu einer Zeit umgewälzt wird, wenn die Verdampfersektion nicht zu Verdampfungszwecken verwendet wird, dadurch gekennzeichnet, daß die Flüssigkeit über einen Flüssigkeit-Vorratsbehälter (9) und eine Flüssigkeit-Speisepumpe (10) zurück zur Verdampfersektion (1) umgewälzt wird und daß die Verdampfersektion (1) sowie die Kondensationssektion (3) jeweils mit einer Mehrzahl von Verdampfern (1-1, 1-2) sowie einer Mehrzahl von Kondensatoren (3-1, 3-2) und Regeleinrichtungen (13, 15, 16, 24, 19) ausgestattet sind, wobei die Regeleinrichtungen so betätigt werden, daß eine Zufuhr von Arbeitsflüssigkeit sowie warmem und kaltem Meerwasser jeweils zu einigen aus der Mehrzahl der Verdampfer sowie Kondensatoren in Zeiträumen eines niedrigen Bedarfs unterbrochen wird, womit diese Kondensatoren und Verdampfer funktionsuntüchtig gemacht werden, zu welcher Zeit das kalte Wasser durch die untätigen Verdampfer (1-1, 1-2) in einer zur Umwälzrichtung des warmen Wassers durch diese während eines Betriebs entgegengesetzten Richtung umgewälzt wird, so daß unerwünschte, in den nicht im Betrieb befindlichen Verdampfern abgelagerte Stoffe weggespült werden.

4. Verfahren nach Anspruch 3, wobei die während Zeiträumen eines niedrigen Bedarfs nicht betriebenen Verdampfer und Kondensatoren in Aufeinanderfolge gewechselt werden.

**Revendications**

1. Centrale de conversion d'énergie thermique des mers dans laquelle le courant électrique est produit à l'aide d'un liquide actionneur, dans laquelle de la vapeur du liquide actionneur est formée par évaporation du fait de l'échange de chaleur avec l'eau chaude extraite d'une couche superficielle d'une mer et fournie à un poste d'évaporation (1), la vapeur est introduite dans un poste (2) de génération de courant électrique et la vapeur s'échappant dudit poste de génération de courant électrique est condensée du fait de l'échange de chaleur avec l'eau froide circulant dans un poste de condensation et prélevée plus profondément dans ladite mer pour se retrouver dans un poste de condensation (3), un moyen étant prévu pour permettre à l'eau froide de circuler à travers le poste d'évaporation à un moment où il n'est pas utilisé à des fins d'évaporation, caractérisée en ce que le liquide recircule jusqu'audit poste d'évaporation (1) via un réservoir (9) de liquide et une pompe (10) d'alimentation en liquide, et en ce que le poste d'évaporation (1) et ledit poste de condensation (3) comportent respectivement une pluralité d'évaporateurs (1-1, 1-2) et une pluralité de condenseurs (3-1, 3-2), et des moyens de commande (13, 15, 16, 24, 19) de façon que la fourniture de liquide actionneur et d'eau de mer chaude et froide respectivement à certains de ladite pluralité d'évaporateurs et de condenseurs puisse être interrompue durant les périodes de faible demande, en mettant au repos ces condenseurs et évaporateurs, et à cet instant ladite eau froide peut circuler à travers lesdits évaporateurs (1-1, 1-2) au repos en sens contraire au sens de circulation de ladite eau chaude à travers ceux-ci pendant le fonctionnement, de façon à éliminer par lavage les corps étrangers indésirables déposés dans lesdits évaporateurs au repos.

2. Centrale de conversion d'énergie thermique des mers selon la revendication 1, caractérisée en ce que le parcours dudit liquide actionneur entre le poste de condensation (3) et ledit poste d'évaporation (1) à travers ledit réservoir (9) de liquide et ladite pompe (10) d'alimentation en liquide est enfermé dans une chemise (12) d'eau à travers laquelle ladite eau froide circule de façon à refroidir ledit liquide actionneur quand il circule dans ledit parcours.

3. Procédé d'exploitation de centrale de conversion d'énergie thermique des mers dans laquelle le courant électrique est produit à l'aide d'un liquide actionneur, dans lequel de la vapeur du liquide actionneur est formée par évaporation du fait de l'échange de chaleur avec l'eau chaude extraite d'une couche superficielle d'une mer et fournie à un poste d'évaporation (1), la vapeur est introduite dans un poste (2) de génération de courant électrique et la vapeur s'échappant dudit poste de génération de courant électrique est condensée du fait de l'échange de chaleur avec l'eau froide circulant dans un poste de condensation et prélevée plus profondément dans ladite mer pour se retrouver dans un poste de condensation (3), l'eau froide circulant à travers le poste d'évaporation (1) à un moment ou le poste d'évaporation n'est pas utilisé à des fins d'évaporation, caractérisé en ce que la vapeur recircule jusqu'audit poste d'évaporation (1) via un réservoir (9) de liquide et une pompe (10) d'alimentation en liquide, et en ce que le poste d'évaporation (1) et ledit poste de condensation (3) sont respectivement pourvus d'une pluralité d'évaporateurs (1-1, 1-2) et d'une pluralité de condenseurs (3-1, 3-2) et de moyens de commande (13, 15. 16, 24, 19), et dans lequel les moyens de commande fonctionnent de façon que la fourniture de liquide actionneur et d'eau de mer chaude et froide respectivement à certains de ladite pluralité d'évaporateurs et de condenseurs soit interrompue durant les périodes de faible demande, en mettant au repos ces condenseurs et évaporateurs, et à cet instant ladite eau froide circule à travers lesdits évaporateurs (1-1, 1-2) au repos en sens contraire au seos de circulation de ladite eau chaude à travers ceux-ci pendant le fonctionnement, de façon à éliminer par lavage les corps étrangers indésirables déposés dans lesdits évaporateurs au repos.

4. Procédé selon la revendication 3, dans lequel les évaporateurs et les condenseurs au repos pendant les périodes de faible demande changent tour à tour.

FIG.1

EP 0 162 579 B1

## FIG.2

# FIG.3